# EUROPÄISCHE PATENTSCHRIFT

(11) **EP 3 930 421 B1**
(45) Veröffentlichungstag und Bekanntmachung des Hinweises auf die Patenterteilung: **12.02.2025**
(21) Anmeldenummer: 21179205.6
(22) Anmeldetag: 14.06.2021
(51) Int. Cl.: H05B 1/02, H05B 3/26

(54) **HEIZEINRICHTUNG MIT EINER TEMPERATURMESSEINRICHTUNG UND VERFAHREN ZUR TEMPERATURMESSUNG AN DER HEIZEINRICHTUNG UND ZUR HERSTELLUNG**
HEATING DEVICE WITH A TEMPERATURE MEASURING DEVICE AND METHOD FOR TEMPERATURE MEASUREMENT AT THE HEATING DEVICE AND FOR ITS PRODUCTION
DISPOSITIF DE CHAUFFAGE DOTÉ D'UN DISPOSITIF DE MESURE DE LA TEMPÉRATURE ET PROCÉDÉ DE MESURE DE LA TEMPÉRATURE SUR LE DISPOSITIF DE CHAUFFAGE ET DE SA FABRICATION

(30) Priorität: 23.06.2020 DE 102020207784
(43) Veröffentlichungstag der Anmeldung: 29.12.2021
(73) Patentinhaber: E.G.O. Elektro-Gerätebau GmbH, 75038 Oberderdingen (DE)
(72) Erfinder: Kümmerle, Hannes, 75038 Oberderdingen (DE); Schmidt, Kay, 75038 Oberderdingen (DE); Schmieder, Manuel, 75038 Oberderdingen (DE); Tafferner, Michael, 76316 Malsch (DE); Zipplies, Henry, 75031 Eppingen (DE)
(74) Vertreter: Patentanwälte Ruff, Wilhelm, Beier, Dauster & Partner mbB

(56) Entgegenhaltungen:
- EP-B1- 2 163 130
- EP-B1- 3 197 241
- WO-A1-2006/083162
- WO-A1-2007/136268
- US-A1- 2020 056 811

## Beschreibung

### Anwendungsgebiet und Stand der Technik

Die Erfindung betrifft eine Heizeinrichtung mit einer Temperaturmesseinrichtung für diese Heizeinrichtung sowie Verfahren zur Temperaturmessung an einer solchen Heizeinrichtung und auch Verfahren zur Herstellung einer solchen Heizeinrichtung.

Es ist bekannt aus der EP 3 145 273 B1, eine Heizeinrichtung mit einer Temperaturmesseinrichtung zu versehen. Die Heizeinrichtung weist einen flächigen Träger, Heizleiter und eine elektrisch leitfähige Anschlussfläche nach Art einer Elektrode auf, wobei zwischen den beiden eine Dielektrikumschicht vorgesehen ist. Hier kann ein temperaturabhängiger Leckstrom durch diese Dielektrikumschicht erfasst werden mittels einer Messvorrichtung und als Maß für eine lokale Temperaturänderung an der Heizeinrichtung ausgewertet werden. Derartige lokale Temperaturänderungen treten aber erfahrungsgemäß nur nahe oder direkt am Heizleiter auf. Des Weiteren messen sie im Wesentlichen die vom Heizleiter beeinflusste Temperatur.

Aus der US 2020/056811 A1 ist eine weitere Heizeinrichtung bekannt, die eine Temperaturmeßeinrichtung aufweist. Ähnlich wie zuvor beschrieben, ist zwischen einem Heizleiter und einer Elektrode eine Dielektrikumschicht vorgesehen, durch die eine temperaturabhängiger Leckstrom fließt. Dieser Leckstrom kann erfasst und anhand dessen eine Temperaturänderung oder Temperatur an der Heizeinrichtung ausgewertet werden.

Aus der WO 2006/083 162 A1 ist eine weitere Heizeinrichtung mit einer Temperaturmesseinrichtung bekannt, die eine Elektrode zwischen Isolationsschicht und Träger samt elektrischer Isolierung aufweist. Diese Elektrode überdeckt eine Fläche und kann beispielsweise als Gitter ausgebildet sein. Sie weist einen einzigen Anschluss auf zur Erfassung eines von einem Heizleiter durch eine Dielektrikumsschicht hindurchgehenden Stroms auf. Deswegen reicht hier auch ein einziger Anschluss. Durch die flächige Ausgestaltung der Elektrode kann das Auftreten eines Leckstroms auf möglichst großer Fläche erkannt werden.

### Anwendungsgebiet und Stand der Technik

Der Erfindung liegt die Aufgabe zugrunde, eine eingangs genannte Heizeinrichtung sowie Verfahren zur Temperaturmessung damit und Verfahren zu deren Herstellung zu schaffen, mit denen Probleme des Standes der Technik gelöst werden können und es insbesondere möglich ist, eine solche Heizeinrichtung vorteilhaft herstellen bzw. aufbauen zu können und vorteilhaft eine Temperatur daran erfassen zu können.

Gelöst wird diese Aufgabe durch eine Heizeinrichtung mit den Merkmalen des Anspruchs 1, durch ein Verfahren zur Temperaturmessung an einer solchen Heizeinrichtung mit den Merkmalen des Anspruchs 13 sowie durch Verfahren zur Herstellung einer solchen Heizeinrichtung mit den Merkmalen der Ansprüche 14 oder 15. Vorteilhafte sowie bevorzugte Ausgestaltungen der Erfindung sind Gegenstand der weiteren Ansprüche und werden im Folgenden näher erläutert. Dabei werden manche der Merkmale nur für die Heizeinrichtung selbst oder nur für eines der genannten Verfahren erläutert. Sie sollen jedoch unabhängig davon sowohl für die Heizeinrichtung als auch für eines der Verfahren selbständig und unabhängig voneinander gelten können**.**

Es ist vorgesehen, dass die Heizeinrichtung einen flächigen Träger aufweist und mindestens einen Heizleiter auf dem flächigen Träger, wobei der Heizleiter gegebenenfalls mehrere Teil-Heizleiter aufweisen oder in mehrere solcher Teil-Heizleiter aufgeteilt sein kann. Des Weiteren ist eine längliche Elektrode auf dem flächigen Träger vorgesehen, wobei auch hier entweder nur eine einzige längliche Elektrode vorgesehen sein kann oder noch mindestens eine weitere Zusatz-Elektrode vorgesehen sein kann. Auf dem Träger ist ein Schichtaufbau vorgesehen mit einer Isolationsschicht zwischen dem Heizleiter und der Elektrode. Diese Isolationsschicht weist vorteilhaft dielektrische Eigenschaften auf, wie dies an sich aus dem Stand der Technik bekannt ist. Es ist des Weiteren eine Messvorrichtung zum Erfassen lokaler hoher Temperaturen an der Heizeinrichtung vorgesehen, welche mit der Elektrode und mit dem Heizleiter verbunden ist. Die Messvorrichtung ist dazu ausgebildet, einen temperaturabhängigen Leckstrom durch die Isolationsschicht zwischen Heizleiter und Elektrode zu erfassen, der im Bereich weniger mA liegen kann. Dieser temperaturabhängige Leckstrom wird als Maß für eine lokale Temperatur bzw. Temperaturänderung an der Heizeinrichtung ausgewertet. Dieser Mechanismus ist grundsätzlich aus dem Stand der Technik bekannt, auf den diesbezüglich verwiesen wird, so dass hier auf unnötige Wiederholungen verzichtet werden kann. Damit ist es vor allem auch möglich, besonders hohe Temperaturen zu erkennen und durch Gegensteuern zu vermeiden, dass sie die Heizeinrichtung oder ein die Heizeinrichtung aufweisendes elektrisches Gerät beschädigen.

Erfindungsgemäß ist vorgesehen, dass die Elektrode selbst aus einem Material mit einer Temperaturabhängigkeit seines elektrischen Widerstands besteht, so dass sie selbst direkt zur Temperaturmessung verwendet werden kann. Sie leitet also nicht nur einen als Signal dienenden Strom, sondern erfasst sozusagen selbst als eine Art Sensor die Temperatur. Dafür liegt die Temperaturabhängigkeit des elektrischen Widerstands des Elektrodenmaterials in einem Temperaturbereich von 0°C bis 500°C zwischen 0,0005/°C und 0,01/°C bzw. zwischen 0,000500 = 500 ppm/K und 10.000 ppm/K, insbesondere bezogen als Referenz auf Raumtemperatur. Des Weiteren ist die Temperaturmesseinrichtung mit der Elektrode bzw. mit Enden oder Anschlüssen der Elektrode verbunden, um an der Elektrode eine Temperatur zu messen unter Verwendung der Temperaturabhängigkeit des elektrischen Widerstands der Elektrode. Eine solche Temperaturmessung aufgrund eines temperaturabhängigen elektrischen Widerstands ist dem Fachmann ebenfalls ausreichend bekannt und kann entsprechend diesem Stand der Technik implementiert werden. Die Besonderheit der Erfindung liegt hier eben darin, dass die Elektrode, die für die genannte Temperaturerfassung anhand des Leckstroms verwendet wird, nun auch selbst aufgrund ihrer speziell vorgesehenen temperaturabhängigen Eigenschaften als Temperatursensor verwendet wird.

In Ausgestaltung der Erfindung kann die Temperaturabhängigkeit des elektrischen Widerstands der Elektrode bzw. des Elektrodenmaterials in dem genannten Temperaturbereich von 0°C bis 200°C zwischen 0,0015/°C und 0,005/°C bzw. zwischen 0,0015 = 1.500 ppm/K und 5.000 ppm/K liegen, besonders vorteilhaft bei etwa 0,0035/°C bzw. 0,0035 = 3.500 ppm/K. Der temperaturabhängige Widerstand der Elektrode lässt sich somit bestimmen und aus dem jeweiligen elektrischen Widerstand bzw. seiner Änderung kann die Temperatur genau bestimmt werden.

Vorteilhaft kann für die Elektrode Edelmetall verwendet werden, beispielsweise Silber, Palladium, Platin, Gold oder Ruthenium. Es kann auch unabhängig davon ganz allgemein ein Elektrodenmaterial mit PTC/NTC-Effekt verwendet werden.

In Ausgestaltung der Erfindung ist es möglich, dass die Elektrode zumindest teilweise von dem Heizleiter überdeckt ist oder überlappt ist, insbesondere bezüglich einer Projektion auf die Ebene des Trägers. Dieser Träger ist ganz allgemein vorteilhaft eben bzw. plan ausgebildet, er kann aber auch gewölbt oder rohrförmig ausgebildet sein, insbesondere kann an der Außenseite des Rohrs der Aufbau der Funktionsschichten vorgesehen sein. Zwischen Heizleiter und Elektrode verläuft die Isolationsschicht, wobei vorteilhaft die Isolationsschicht großflächiger bzw. viel großflächiger ist als der Bereich, der von Heizleiter und/oder Elektrode überdeckt wird. Es kann vorgesehen sein, dass entlang einer Längserstreckung des Heizleiters ein Abschnitt der Elektrode verläuft und dabei eben von dem Heizleiter überdeckt bzw. überlappt wird. Insbesondere können entlang mindestens 70% oder 90% der Längserstreckung des Heizleiters die Elektrode oder ein Abschnitt der Elektrode verlaufen, so dass in diesem Bereich eine Temperatur-überwachung des Heizleiters möglich ist. Vorteilhaft verlaufen eine Elektrode oder ein Abschnitt der Elektrode entlang der gesamten Längserstreckung des Heizleiters, so dass die Temperatur überall entlang des Heizleiters überwacht werden kann. Dann ist maximale Sicherheit gegen Beschädigung der Heizeinrichtung durch zu hohe Temperatur des Heizleiters erreichbar.

In Ausgestaltung der Erfindung kann die Elektrode eine geringe Breite aufweisen im Vergleich zu ihrer Länge. So kann die Länge mindestens zwanzigmal so groß sein wie die Breite, vorzugsweise mindestens fünfzigmal so groß sein wie die Breite. Somit wird für die Elektrode relativ wenig Elektrodenmaterial benötigt, welches häufig teuer ist. Für die Aufgabe der Erfassung eines Leckstroms durch die Isolationsschicht zum Heizleiter hin reicht auch eine solche relativ geringe Breite der Elektrode. Für die Temperaturmessung direkt mittels der Elektrode kann ein geringer Leiterquerschnitt von Vorteil sein.

Vorteilhaft kann die Isolationsschicht einen elektrischen Widerstand zwischen einer Oberseite und einer Unterseite bzw. zwischen Heizleiter und Elektrode aufweisen, der mindestens 1 MΩ in einem Temperaturbereich von 100°C bis 150°C beträgt. Vorteilhaft können dies sogar mindestens 10 MΩ sein. Bei einer bestimmten Temperatur, die als beginnend kritisch angesehen wird für die Heizeinrichtung bezüglich einer lokalen Temperaturerhöhung, kann der elektrische Widerstand stark sinken. Dazu kann die Materialzusammensetzung entsprechend gewählt werden. Dies ist aber aus dem vorgenannten Stand der Technik grundsätzlich bekannt.

Für die Elektrode kann in Ausgestaltung der Erfindung vorgesehen sein, dass ihr gesamter elektrischer Widerstand, also zwischen zwei Elektrodenanschlüssen, zwischen 50 Ω und 100 kΩ liegt in einem genannten Temperaturbereich zwischen 0°C und 500°C. Insbesondere kann der elektrische Widerstand der Elektrode zwischen 5 kΩ und 20 kΩ liegen in diesem Temperaturbereich. Die Veränderung dieses elektrischen Widerstands über der Temperatur bzw. mit einer Temperaturänderung ist obenstehend beschrieben worden.

Für eine genaue und zuverlässige Temperaturauswertung kann vorgesehen sein, dass die Elektrode eine gleichbleibende bzw. konstante Breite entlang ihrer Längserstreckung aufweist. Durch Variation des Verlaufs der Elektrodenbahn, insbesondere durch Biegungen und/oder gerade Abschnitte, können bestimmte Bereiche genauer ausgewertet werden. Auch eine Dicke der Elektrode sollte gleichbleibend sein bzw. konstant, insbesondere auch für eine verbesserte Herstellbarkeit der Elektrode. Eine Breite kann beispielsweise im Bereich von 0,05 mm bis 2 mm liegen, eine Dicke zwischen 3 µm und 1 mm. Des Weiteren sind Ausführungen einer Serienschaltung verschiedener Elektrodenbahngeometrien möglich. Eine Ausführungsform kann beispielsweise eine Serienschaltung eines Elektrodennetzes und einer Sensorelektrode sein. Dies hat den Vorteil, dass durch Auswertung der beiden Auswertemöglichkeiten Leckstrom und Widerstandsmessung die Position der heißen Stelle bestimmt werden kann.

Bevorzugt ist vorgesehen, dass eine Breite eines Heizleiters im Vergleich zu seiner Länge und auch absolut gesehen im Vergleich zur Elektrode erheblich größer ist. Insbesondere kann ein Heizleiter fünfmal bis einhundertmal breiter sein als eine Elektrode, insbesondere als die von dem Heizleiter überlappte Elektrode. Hier ist auch eine vorgenannte Kombination eines Elektrodennetzes und einer Sensorelektrode vorteilhaft möglich.

In nochmals weiterer Ausgestaltung der Erfindung kann vorgesehen sein, dass das Elektrodenmaterial einen veränderlichen Temperaturkoeffizienten seines elektrischen Widerstands aufweist, vorteilhaft ein PTC-Material ist. Dadurch ist erreichbar, dass im Fall sehr hoher Temperaturen keine zu großen Ströme durch die Elektrode fließen bei Messung der Temperatur.

In vorteilhafter Ausgestaltung der Erfindung kann vorgesehen sein, dass die Heizeinrichtung mehrere Heizleiter aufweist bzw. ein Heizleiter mehrere Teil-Heizleiter aufweist. Diese können miteinander verschaltet sein, beispielsweise und vorteilhaft in Serienschaltung. Auch eine Parallelschaltung sowie eine Kombination von Serienschaltung und Parallelschaltung sind grundsätzlich möglich. Bevorzugt überdeckt jeder der Teil-Heizleiter eine Elektrode oder einen Elektrodenabschnitt, insbesondere mit der vorgenannten vorteilhaften Vorgabe, dass eine Überdeckung mindestens 80 % oder 90 % beträgt, insbesondere 100 %. Die einzelnen Teil-Heizleiter können mittels Verbindungsabschnitten miteinander verbunden sein, insbesondere um Biegungen oder Kurven des Teil-Heizleiters selbst vermeiden zu können. Diese wären aus bekannten Gründen für die Stromführung nachteilig. Im Bereich dieser Verbindungsabschnitte können zwar auch eine Elektrode oder ein Elektrodenabschnitt vorgesehen sein, dies muss aber nicht zwingend so sein. Vorteilhaft folgt aber der Verlauf der Elektrode dem Verlauf des Heizleiters. Der elektrische Widerstand der genannten Verbindungsabschnitte sollte deutlich geringer sein als derjenige des Heizleitermaterials, vorteilhaft mindestens um den Faktor 10 geringer sein.

In einer Weiterbildung der Erfindung kann vorgesehen sein, dass mindestens eine Zusatz-Elektrode vorgesehen ist, die aus demselben Material wie die Elektrode besteht. Auch diese Zusatz-Elektrode dient zur Temperaturmessung, allerdings wird sie von keinem Heizleiter überdeckt oder überlappt. Bevorzugt ist ein lateraler Abstand dieser Zusatz-Elektrode zu einem Heizleiter oder zu jedem in der Umgebung liegenden Heizleiter vorgesehen, der die doppelte Breite der Elektrodenbahn oder mindestens 1 mm oder sogar mindestens 2 mm beträgt, vorteilhaft mindestens 10 mm. So kann erreicht werden, dass die Temperatur an der Zusatz-Elektrode hauptsächlich oder sogar ausschließlich vom Träger beeinflusst wird bzw. von einem Medium, an welches der Träger angrenzt oder welches der Träger enthält, beispielsweise Wasser. Eine Temperaturmessung an der Zusatz-Elektrode erfolgt vorteilhaft über eine Änderung von deren elektrischem Widerstand über der Temperatur, also genau wie bei der Elektrode, wie dies zuvor beschrieben worden ist. Somit ist auch die Zusatz-Elektrode an dieselbe Temperaturmesseinrichtung angeschlossen wie die Elektrode, die von dem Heizleiter überdeckt bzw. überlappt wird.

Vorteilhaft kann folgender Schichtaufbau für die Heizeinrichtung vorgesehen sein. Auf den Träger, der aus Keramik oder bevorzugt aus Metall bzw. Stahl bestehen kann, kann eine Deckschicht bzw. eine Trägerisolationsschicht aufgebracht sein. Auf diese Trägerisolationsschicht wird die mindestens eine Elektrode aufgebracht, vorzugsweise sämtliche Elektroden oder Elektrodenabschnitte, insbesondere auch eine vorgenannte Zusatz-Elektrode. Darauf wird wiederum die erfindungsgemäße Isolationsschicht aufgebracht, durch welche ein Leckstrom fließen kann bei lokaler zu hoher Temperatur. Auf diese Isolationsschicht wiederum werden der Heizleiter bzw. sämtliche Heizleiter und Teil-Heizleiter aufgebracht. Darauf wird wiederum eine Abdeckschicht nach außen aufgebracht, insbesondere um den Heizleiter vor Einwirkungen der Atmosphäre bzw. Sauerstoff zu schützen, also vor allem vor Oxidation. Eine elektrische Kontaktierung an die Elektrode und den Heizleiter erfolgt auf bekannte Art und Weise, insbesondere indem diese in seitlicher Richtung nicht von den jeweiligen Isolationsschichten überdeckt werden.

Alternativ kann die Reihenfolge auch sein Träger, Trägerisolationsschicht bzw. Dielektrikumsschicht, Heizleiter, Isolationsschicht bzw. Dielektrikumsschicht, Elektrode/n, Abdeckschicht.

Bei einem erfindungsgemäßen Verfahren zur Temperaturmessung an einer solchen Heizeinrichtung ist vorgesehen, dass dies auf zwei unterschiedliche Arten erfolgt. Einerseits erfolgt eine Temperaturerfassung über einen durch die Isolationsschicht zwischen Heizeinrichtung und Elektrode fließenden temperaturabhängigen Leckstrom. Dabei kann insbesondere festgestellt werden, dass eine zu hohe lokale Temperatur vorliegt, wenn ein solcher Leckstrom überhaupt in nennenswertem Maß fließt. Andererseits erfolgt eine Temperaturmessung an der Heizeinrichtung, indem eine Temperaturänderung an der Elektrode alleine gemessen wird und über den temperaturabhängigen elektrischen Widerstand der Elektrode bestimmt wird. Hierzu kann eine Steuerung der Heizeinrichtung bzw. für die Heizeinrichtung vorgesehen sein, in der diese Auswertung als zeitliche Temperaturänderung erfolgt.

Bei einem ersten allgemeinen erfindungsgemäßen Verfahren zur Herstellung einer vorbeschriebenen Heizeinrichtung weist diese Heizeinrichtung mehrere Heizleiter auf. Dabei können es auch mehrere vorbeschriebene Teil-Heizleiter sein. Sämtliche Heizleiter und gegebenenfalls auch sämtliche Teil-Heizleiter der Heizeinrichtung werden im selben Verfahrensabschnitt oder im selben Verfahrensschritt und aus demselben Heizleitermaterial aufgebracht. Erfolgt dies in mehreren Schritten, so wird auch dieses für sämtliche Heizleiter bzw. Teil-Heizleiter identisch durchgeführt.

Bei einem zweiten erfindungsgemäßen Verfahren zur Herstellung einer Heizeinrichtung, wie sie zuvor beschrieben worden ist, weist die Heizeinrichtung mehrere Elektroden auf. Insbesondere ist auch eine vorbeschriebene Zusatz-Elektrode vorgesehen. Sämtliche Elektroden bzw. Elektrodenabschnitte, insbesondere auch die vorgenannte Zusatz-Elektrode, werden im selben Verfahrensschritt und aus demselben Elektrodenmaterial aufgebracht. Ähnlich wie zuvor für den Heizleiter beschrieben gilt auch hier, dass in dem Fall, dass mehrere Schichten des Elektrodenmaterials aufgebracht werden, dies identisch erfolgt für sämtliche Elektroden bzw. Elektrodenabschnitte und auch für eine möglicherweise vorgesehene Zusatz-Elektrode.

### Kurzbeschreibung der Zeichnungen

Ausführungsbeispiele der Erfindung sind in den Zeichnungen schematisch dargestellt und werden im Folgenden näher
- Fig. 1: eine Draufsicht auf eine erste Ausgestaltung einer erfindungsgemäßen Heizeinrichtung mit flächigem Heizleiter und mäanderförmiger Elektrode,
- Fig. 2: einen Schnitt durch die Heizeinrichtung aus Fig. 1 mit dem Schichtaufbau,
- Fig. 3 bis Fig. 6: verschiedene Abwandlungen von Heizeinrichtungen ähnlich Fig. 1 mit unterschiedlichen Ausgestaltungen für Heizleiter und Elektrode.

### Detaillierte Beschreibung der Ausführungsbeispiele

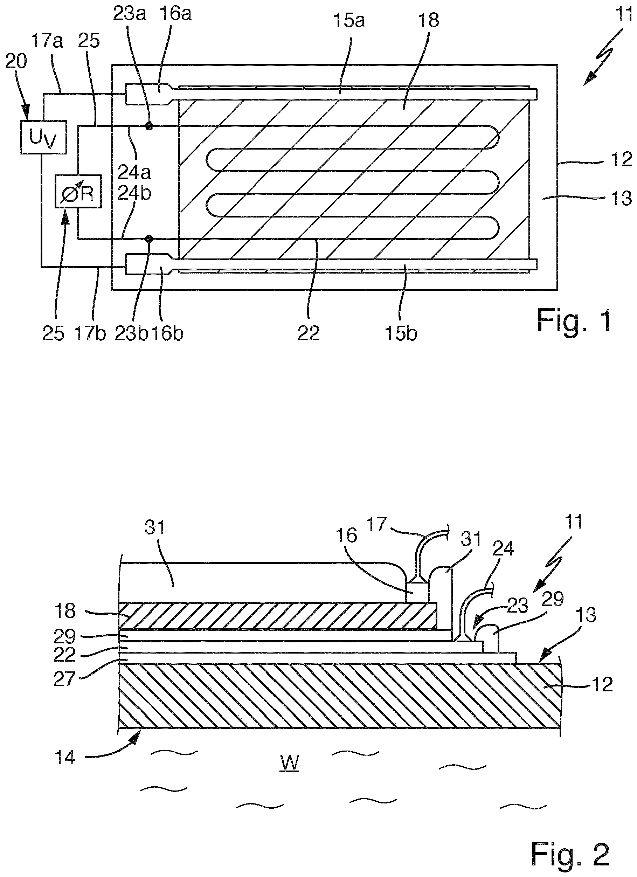

In der Fig. 1 ist eine erfindungsgemäße Heizeinrichtung 11 in Draufsicht dargestellt. Sie weist hier rechteckige Form auf, kann aber auch beliebige Form aufweisen. Neben planen Ausgestaltungen eine Heizeinrichtung 11 sind auch gewölbte sowie rohrförmige Heizeinrichtungen denkbar. Insbesondere ist die Heizeinrichtung 11 in Dickschichttechnik hergestellt.

Die Heizeinrichtung 11 weist einen Träger 12 auf, der entweder aus elektrisch isolierender Keramik oder aus Metall besteht. Der genannte Schichtaufbau befindet sich auf einer Trägeroberseite 13, welche bei einem Träger 12 aus Metall mit einer Funktionsisolierung 27 versehen ist. Auf der Trägeroberseite 13 sind parallel mit Abstand zueinander zwei Kontaktbahnen 15a und 15b angeordnet aus elektrisch sehr gut leitendem Material. Sie gehen nach links in Kontaktflächen 16a und 16b über. Die Kontaktbahnen 15a und 15b kontaktieren einen breiten und flächig ausgebildeten Heizleiter 18 zwischen sich. Hierzu wird beispielsweise auf die EP 3250003 A1 verwiesen. Die Stromflussrichtung durch den Heizleiter 18 ist hier rechtwinklig zur Längserstreckung der Kontaktbahnen 15a und 15b.

Eine Versorgungsspannungsquelle 20 ist mittels Kontaktleitungen 17a und 17b an die Kontaktflächen 16a und 16b angeschlossen. Dies ist an sich aus dem Stand der Technik bekannt. Vorteilhaft ist die Versorgungsspannungsquelle die Netzspannung mit 230 V in einem Haushalt als Wechselspannung. Möglich ist auch eine Verwendung im Automotive-Bereich bzw. in einem Automobil, also an Gleichspannung von 12 V oder 48 V oder noch mehr.

In der Fläche des Heizleiters 18 verläuft eine Elektrode 22 mäanderförmig in sechs parallelen Bahnen. Die Bahnen können jeweils in etwa gleichen Abstand zueinander aufweisen, sie können aber auch unterschiedlichen Abstand zueinander aufweisen, zum Beispiel für unterschiedliche Leistungsdichten oder um definierte Bereiche genauer auswerten zu können. Die oberste Bahn und die unterste Bahn können auch noch näher an den Kontaktbahnen 15a und 15b verlaufen. Die Elektrode 22 weist links zwei Elektrodenanschlüsse 23a und 23b auf. Mittels Elektrodenleitungen 24a und 24b ist eine Widerstandsmesseinrichtung 25 angeschlossen. Damit kann der elektrische Widerstand der Elektrode 22 gemessen werden, und aufgrund dessen Temperaturabhängigkeit kann die Temperatur bestimmt werden. Die Elektrode 22 besteht hierzu aus einem eingangs genannten Material mit einem Silberanteil von 10% bis 90% oder 80% bis 90%. Es kann aber auch ein eingangs genanntes Material für die Elektrode verwendet werden.

Es ist erkennbar, dass die Temperaturmessung aufgrund des temperaturabhängigen veränderlichen elektrischen Widerstands der Elektrode 22 keine lokale Temperaturmessung an einem einzigen Punkt ermöglicht, sondern vielmehr eine Temperaturmessung sozusagen verteilt oder gemittelt über die von der Elektrode 22 bedeckte Fläche hinweg. Für eine lokale Temperaturmessung, insbesondere zur Erfassung von gefährlichen lokalen Übertemperaturen, wird eine Leckstromerfassung verwendet, wie sie aus dem eingangs genannten Stand der Technik bekannt ist. Sie ist dann mittels der Kontaktleitungen 17a und 17b sowie Elektrodenleitungen 24a und 24b angeschlossen.

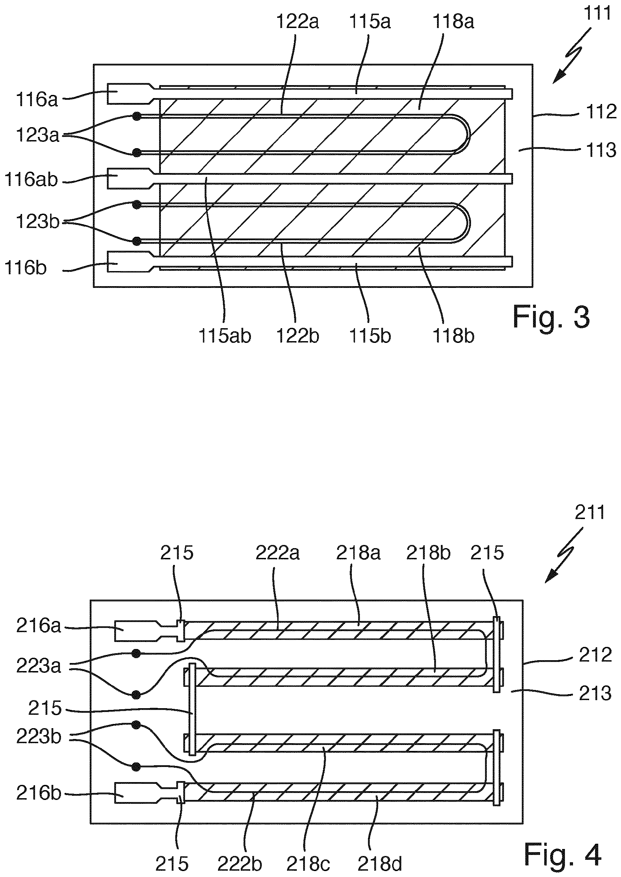

Zur Erläuterung hierzu wird auf die Fig. 2 und vor allem auf den vorgenannten Stand der Technik explizit verwiesen. Gemäß Fig. 2 weist der Träger 12 eine Trägeroberseite 13 mit dem Schichtaufbau und eine Trägerunterseite 14 auf. Die Trägerunterseite 14 ist hier in Kontakt mit Wasser W, welches von der Heizeinrichtung 11 beheizt werden soll. Der mittels Dickschichttechnik hergestellte Schichtaufbau auf der Trägeroberseite 13 weist als unterste Schicht die genannte Funktionsisolierung 27 des Trägers 12 auf. Auf die Funktionsisolierung 27 wird die Elektrode 22 in der gewünschten Form aufgebracht. Variationen dieser Form sind eingangs erläutert worden und werden nachfolgend anhand der Fig. 4 bis 5 noch dargestellt. Die Elektrode 22 weist rechts einen Elektronenanschluss 23 auf, an den eine Elektrodenleitung 24 angeschlossen ist, hier beispielsweise angeschweißt ist. Sie kann auch angelötet sein, alternativ ist ein Kontaktieren mittels angepressten Kontakten oder mittels eines Klemmsteckers möglich.

Die Elektrode 22 wird von einer Isolationsschicht 29 bedeckt, welche die eingangs genannten dielektrischen Eigenschaften aufweist. Dazu gehört, dass bei einer bestimmten höheren Temperatur, beispielsweise 350°C bis 400°C, der elektrische Widerstand stark absinkt und ein Leckstrom fließen kann. Dieser Leckstrom kann hier fließen von dem auf die Isolationsschicht 29 aufgebrachten Heizleiter 18 zur Elektrode 22 hin. Der Heizleiter 18 weist rechts wiederum eine drauf aufgebrachte Kontaktfläche 16 auf, welche mittels einer Kontaktleitung 17 angeschlossen werden kann. Bei dieser Temperatur ist die Gefahr einer dauerhaften Beschädigung gegeben, wenn sie über einen Zeitraum von mehr als 1 Minute oder mehr als 20 Sekunden vorherrscht.

Auf den Heizleiter 18 wiederum wird eine Abdeckschicht 31 aufgebracht. Sie spart die Kontaktfläche 16 aus zum nachträglichen Anbringen der Kontaktleitung 17, ähnlich wie beim Aufbringen der Isolationsschicht 29 der Elektrodenanschluss 23 frei bleibt. Die Abdeckschicht 31 dient zum Schutz des Aufbaus der Trägereinrichtung 11 nach außen, insbesondere zum Schutz des Heizleiters 18 vor der Umgebungsatmosphäre und insbesondere vor Oxidation.

Zum Funktionsprinzip der Leckstrommessung sowie zu Temperaturen, bei denen sie durchgeführt werden kann, wird an dieser Stelle nichts weiter ausgeführt, da dies aus dem Stand der Technik ausreichend entnehmbar ist. Auf die Fig. 1 bezogen bedeutet dies, dass der Leckstrom vom Heizleiter 18 zu der Elektrode 22 an einer besonders heißen Stelle der Isolationsschicht 29 zwischen den beiden fließt. Im Bereich deutlich unterhalb der genannten kritischen Temperatur fließt kein Leckstrom oder kein nennenswerter Leckstrom.

Das Messen der Temperatur der Heizeinrichtung 11 mittels des temperaturabhängigen elektrischen Widerstands der Elektrode 22 kann jederzeit erfolgen. Vorteilhaft kann dies auch gleichzeitig mit der Leckstromüberwachung erfolgen.

In der Fig. 3 ist ein alternativer Aufbau dargestellt. Die Heizeinrichtung 111 mit einem Träger 112 weist an der Trägeroberseite drei parallele Kontaktbahnen 115a, 115ab und 115b auf. Sie weisen links jeweils Kontaktflächen 116a, 116ab und 116b auf. Dies ist noch ähnlich wie bei der Fig. 1. Es kann eine durchgehende Fläche von dem Heizleiter 118 bedeckt werden, also von der oberen Kontaktbahn 115a bis zur unteren Kontaktbahn 115b. Die mittlere Kontaktbahn 115ab verläuft mittig und bildet eine Art Zwischenabgriff. Je nach Anlegen einer Versorgungsspannung an die Kontaktflächen 116a, 116ab und 116b können die beiden Heizleiter 118a und 118b als Teil-Heizleiter in Serie oder parallel zueinander geschaltet werden, möglicherweise auch an unterschiedliche Versorgungsspannungen.

Über dem oberen Teil-Heizleiter 118a zwischen Kontaktbahn 115a und Kontaktbahn 115ab verläuft eine obere Elektrode 122a in einer einzigen Schleife. Sie ist links über zwei Elektrodenanschlüsse 123a elektrisch kontaktierbar und kann beispielsweise entsprechend Fig. 1 an eine Widerstandsmesseinrichtung angeschlossen sein, die hier nicht dargestellt ist. Ebenso kann eine Leckstromerfassung auf vorgenannte Art und Weise angeschlossen sein. Über dem unteren Teil-Heizleiter 118b zwischen Kontaktbahn 115ab und Kontaktbahn 115b verläuft eine identisch ausgebildete untere Elektrode 122b. Sie kann über links vorgesehene Elektrodenanschlüsse 123b auf genannte Art und Weise elektrisch kontaktiert werden. So ist nicht nur eine Leckstromerfassung über beiden Teil-Heizleitern 118a und 118b möglich, sondern auch eine jeweilige Erfassung der absoluten Temperatur.

Ein weiterer alternativer Aufbau einer erfindungsgemäßen Heizeinrichtung 211 ist in Fig. 4 dargestellt. Hier sind vier parallele streifenförmige Teil-Heizleiter 218a, 218b, 218c und 218d vorgesehen. Sie sind mittels Kontaktbahnen 215 in Serie miteinander geschaltet und weisen zwei Kontaktflächen 216a und 216b auf. Es sind wiederum zwei Elektroden vorgesehen, nämlich eine obere Elektrode 222a und eine untere Elektrode 222b. Die obere Elektrode 222a verläuft sozusagen in einer Schleife nahezu vollständig mittig entlang der beiden Teil-Heizleiter 218a und 218b. Sie ist über Elektrodenanschlüsse 223a an ihren Enden elektrisch kontaktierbar. In ähnlicher Form verläuft die untere Elektrode 222b entlang nahezu der vollständigen Länge der beiden unteren Teil-Heizleiter 218c und 218d. Sie wird mittels Elektrodenanschlüssen 223b an ihren Enden elektrisch kontaktiert. Somit ist hier in zwei Bereichen eine Leckstromerfassung möglich, da eben zwei voneinander getrennte Elektroden 222a und 222b vorliegen. Ebenso kann, obwohl die vier Teil-Heizleiter immer auf dieselbe Art und Weise seriell betrieben werden, sowohl in der oberen Hälfte als auch in der unteren Hälfte separat eine Temperaturmessung über den temperaturabhängigen elektrischen Widerstand der Elektroden 222a und 222b erfolgen.

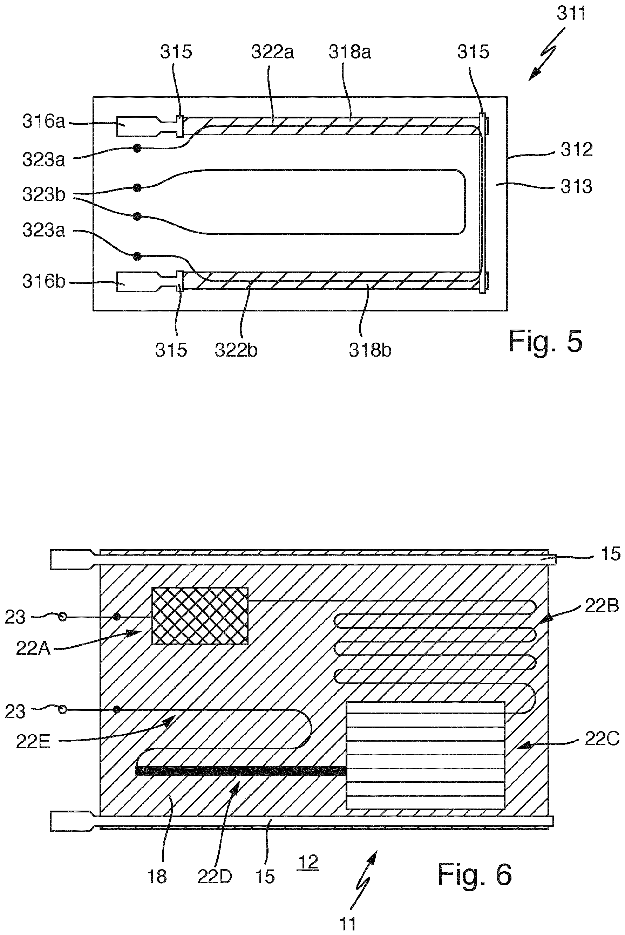

Ein nochmals weiterer alternativer Aufbau einer Heizeinrichtung 311 ist in Fig. 5 dargestellt. Auf einem Träger 312 mit einer Trägeroberseite 313 sind, quasi vereinfacht zur Fig. 4, zwei beabstandete und parallele Teil-Heizleiter 318a und 318b vorgesehen. Sie sind rechts mittels einer Kontaktbahn 315 verbunden. An den linken Enden sind sie mittels einer kurzen Kontaktbahn 315 und Kontaktflächen 316a und 316b elektrisch anschließbar auf vorgenannte Art und Weise. Ihr Abstand ist relativ groß, kann aber auch geringer sein, insbesondere auch nur das zweifache bis vierfache der Breite eines einzigen Teil-Heizleiters betragen.

Eine äußere Elektrode 322a verläuft ähnlich wie in Fig. 4 über die nahezu vollständige Länge sowohl des oberen Teil-Heizleiters 318a als auch des unteren Teil-Heizleiters 318b. Dabei verläuft sie auch unterhalb der rechten Kontaktbahn 315, wo aber nicht mit einem Leckstrom zu rechnen ist. Dennoch kann auch hier eine Temperaturmessung erfolgen. Diese äußere Elektrode 322a kann mittels Kontaktflächen 323a elektrisch kontaktiert werden.

Innerhalb der freien Fläche zwischen den beiden Teil-Heizleitern 318a und 318b verläuft in einer Schleife eine innere Elektrode 322b mit zwei Elektrodenanschlüssen 323b. Sie kann auch zur Leckstrommessung verwendet werden, wobei kaum anzunehmen ist, dass bei diesem großen Abstand zu den Teil-Heizleitern 318a und 318b ein Leckstrom an der inneren Elektrode 322b auftritt. Hierfür ist schließlich die äußere Elektrode 322a vorgesehen. Die innere Elektrode 323b kann ausschließlich zur Temperaturmessung vorgesehen sein. Sie kann vorteilhaft im selben Herstellungsschritt wie die äußere Elektrode 322a aufgebracht werden, so dass damit eine Temperaturmesseinrichtung bzw. eine Art Temperatursensor geschaffen werden kann im gleichen Schritt, in dem auch die für die Leckstromerfassung notwendige äußere Elektrode 322a aufgebracht wird. Vorteilhaft werden sämtliche Schichten, wie sie aus Fig. 2 zu ersehen sind, durch Dickschichtverfahren aufgebracht, insbesondere mittels Siebdruck. Somit ist der Verfahrensaufwand sehr gering, und der Kostenaufwand besteht im Wesentlichen nur aus dem zusätzlichen Elektrodenmaterial. Des Weiteren ist durch diese innere Elektrode 322b eine Temperaturmessung mit etwas Abstand zu den Teil-Heizleitern 318a und 318b möglich, was als vorteilhaft angesehen wird. So ist eine Verfälschung einer Temperatur, beispielsweise einer Temperatur des von der Heizeinrichtung 311 erhitzten Wassers ähnlich der Fig. 2, durch die eigene höhere Temperatur des Heizleiters an sich reduziert oder sogar ausgeschlossen.

In der Fig. 6 ist eine Heizeinrichtung 11 mit Träger 12 vereinfacht dargestellt, bei der ähnlich der Fig. 1 zwischen zwei Kontaktbahnen 15 ein großflächiger Heizleiter 18 verläuft. In der Fläche zwischen den Kontaktbahnen 15 sind verschiedene mögliche Ausbildungen von Elektroden 22A bis 22E aufgebracht. Sie sind jeweils nur verkleinert und beispielhaft dargestellt zur prinzipiellen Veranschaulichung. Sie weisen zwei Elektrodenanschlüsse 23 auf. Es könnten auch mindestens zwei Elektrodenanschlüsse sein in dem Sinn, dass evtl. noch ein zusätzlicher Mittelabgriff vorhanden wäre.

Die Elektrode 22A ist flächig ausgebildet. Auch wenn sie hier nur kleinflächig dargestellt ist, insbesondere eine kleinere Fläche bedeckt als die Fläche des Heizleiters 18 zwischen den beiden Kontaktbahnen 15, kann sie in der Praxis erheblich großflächiger sein. Insbesondere kann sie nahezu die gesamte Fläche des Halbleiters 18 zwischen den beiden Kontaktbahnen 15 einnehmen. Die Elektrode 22A ist also ein Beispiel für eine flächige bzw. großflächige Ausbildung.

Die Elektrode 22B ist ähnlich ausgebildet wie in der Fig. 1. Sie ist relativ schmal und mäanderförmig und lang. Die Elektrode 22C ist ähnlich wie die Elektrode 22A flächig ausgebildet und etwas größer.

Die Elektrode 22D ist zwar länglich ausgebildet, aber erheblich breiter als die Elektrode 22B und auch die schmale Elektrode 22E darüber. Sie soll veranschaulichen, dass auch eine längliche Elektrode, die als Elektrodenbahn ausgebildet ist, eine gewisse Breite aufweisen kann. Die Breite kann vorgesehen sein, damit die Elektrode eine gewisse Fläche überdeckt oder damit sie bei definierter oder vorgegebener Dicke eine gewisse Menge an Widerstandsmaterial aufweist, also einen gewissen elektrischen Widerstand aufweist. Somit kann die Breite der Elektrode als Parameter verwendet werden, bei vorgegebenem Widerstandsmaterial einen bestimmten elektrischen Widerstand zu erreichen.

## Patentansprüche

1. Heizeinrichtung (11, 111, 211, 311) mit einer Temperaturmesseinrichtung (25) für die Heizeinrichtung, wobei die Heizeinrichtung (11, 111, 211, 311) aufweist:
- einen flächigen Träger (12, 112, 212, 312),
- mindestens einen Heizleiter (18, 118, 218, 318) auf dem flächigen Träger (12, 112, 212, 312),
- eine Elektrode (22, 122a, 122b, 222a, 222b, 322a, 322b) auf dem flächigen Träger (12, 112, 212, 312),
- einen Schichtaufbau auf dem Träger (12, 112, 212, 312) mit einer Isolationsschicht (29) zwischen dem Heizleiter (18, 118, 218, 318) und der Elektrode (22, 122a, 122b, 222a, 222b, 322a, 322b),
- einer Messvorrichtung zum Erfassen lokaler hoher Temperaturen an der Heizeinrichtung (11, 111, 211, 311), wobei die Messvorrichtung mit der Elektrode (22, 122a, 122b, 222a, 222b, 322a, 322b) und mit dem Heizleiter (18, 118, 218, 318) verbunden ist und dazu ausgebildet ist, einen temperaturabhängigen Leckstrom durch die Isolationsschicht (29) zwischen Heizleiter (18, 118, 218, 318) und Elektrode (22, 122a, 122b, 222a, 222b, 322a, 322b) zu erfassen und als Maß für eine lokale Temperaturänderung an der Heizeinrichtung (11, 111, 211, 311) auszuwerten,
wobei:
- die Elektrode (22, 122a, 122b, 222a, 222b, 322a, 322b) aus einem Material mit einer Temperaturabhängigkeit seines elektrischen Widerstands besteht, wobei die Temperaturabhängigkeit zwischen 0,0005/°C und 0,01/°C oder zwischen 500 ppm/K und 10.000 ppm/K liegt in einem Temperaturbereich zwischen 0°C und 500°C,
- die Temperaturmesseinrichtung (25) mit der Elektrode (22, 122a, 122b, 222a, 222b, 322a, 322b) verbunden ist zur Messung einer Temperatur an der Elektrode (22, 122a, 122b, 222a, 222b, 322a, 322b) unter Verwendung der Temperaturabhängigkeit des elektrischen Widerstands der Elektrode (22, 122a, 122b, 222a, 222b, 322a, 322b),
**dadurch gekennzeichnet, dass**:
- die Elektrode (22, 122a, 122b, 222a, 222b, 322a, 322b) länglich ist,
- die Elektrode (22, 122a, 122b, 222a, 222b, 322a, 322b) zwei Elektrodenanschlüsse (23, 23a, 23b, 123a, 123b, 223a, 223b, 323a, 323b) aufweist und damit mit der Temperaturmesseinrichtung (25) verbunden ist.

2. Heizeinrichtung nach Anspruch 1, **dadurch gekennzeichnet, dass** die Temperaturabhängigkeit des elektrischen Widerstands der Elektrode (22, 122a, 122b, 222a, 222b, 322a, 322b) zwischen 0,0015/°C und 0,005/°C oder zwischen 1.500 ppm/K und 5.000 ppm/K liegt in einem Temperaturbereich zwischen 0°C und 500°C.

3. Heizeinrichtung nach Anspruch 1 oder 2, **dadurch gekennzeichnet, dass** die Elektrode (22, 122a, 122b, 222a, 222b, 322a, 322b) zumindest teilweise von dem Heizleiter (18, 118, 218, 318) überdeckt ist mit der Isolationsschicht (29) dazwischen, wobei vorzugsweise entlang einer Längserstreckung des Heizleiters (18, 118, 218, 318) ein Abschnitt der Elektrode (22, 122a, 122b, 222a, 222b, 322a, 322b) verläuft von dem Heizleiter (18, 118, 218, 318) überdeckt, insbesondere entlang mindestens 70% oder 90% der Längserstreckung des Heizleiters (18, 118, 218, 318).

4. Heizeinrichtung nach einem der vorhergehenden Ansprüche, **dadurch gekennzeichnet, dass** die Elektrode (22, 122a, 122b, 222a, 222b, 322a, 322b) eine geringe Breite aufweist im Vergleich zu ihrer Länge, wobei insbesondere die Länge mindestens 20mal so groß ist wie die Breite, vorzugsweise mindestens 50mal so groß ist wie die Breite.

5. Heizeinrichtung nach einem der vorhergehenden Ansprüche, **dadurch gekennzeichnet, dass** die Isolationsschicht (29) einen elektrischen Widerstand zwischen einer Oberseite und einer Unterseite oder zwischen Heizleiter (18, 118, 218, 318) und Elektrode (22, 122a, 122b, 222a, 222b, 322a, 322b) von mindestens 1 MΩ aufweist in einem Temperaturbereich zwischen 0°C und 150°C, vorzugsweise mindestens 10 MΩ.

6. Heizeinrichtung nach einem der vorhergehenden Ansprüche, **dadurch gekennzeichnet, dass** die Elektrode (22, 122a, 122b, 222a, 222b, 322a, 322b) einen gesamten elektrischen Widerstand zwischen 50 Ω und 100 kΩ aufweist in einem Temperaturbereich zwischen 0°C und 500°C, insbesondere zwischen 5 kΩ und 20 kΩ.

7. Heizeinrichtung nach einem der vorhergehenden Ansprüche, **dadurch gekennzeichnet, dass** die Elektrode (22, 122a, 122b, 222a, 222b, 322a, 322b) gleichbleibende Breite entlang ihrer Längserstreckung aufweist, insbesondere auch gleichbleibende Dicke.

8. Heizeinrichtung nach einem der vorhergehenden Ansprüche, **dadurch gekennzeichnet, dass** die Elektrode (22, 122a, 122b, 222a, 222b, 322a, 322b) einen Anteil von Silber als Elektrodenmaterial aufweist, insbesondere bis maximal 95%, vorzugsweise zwischen 80% und 90%.

9. Heizeinrichtung nach einem der vorhergehenden Ansprüche, **dadurch gekennzeichnet, dass** das Elektrodenmaterial einen veränderlichen Temperaturkoeffizienten des elektrischen Widerstands aufweist, vorzugsweise einen positiven Temperaturkoeffizienten des elektrischen Widerstands.

10. Heizeinrichtung nach einem der vorhergehenden Ansprüche, **dadurch gekennzeichnet, dass** der Heizleiter (118, 218, 318) mehrere Teil-Heizleiter (118a, 118b, 218a-d, 318a, 318b) aufweist, die miteinander verschaltet sind, wobei vorzugsweise jeder der Teil-Heizleiter (118a, 118b, 218a-d, 318a, 318b) eine Elektrode (122a, 122b, 222a, 222b, 322a, 322b) oder einen Elektrodenabschnitt überdeckt, wobei insbesondere zwischen den einzelnen Teil-Heizleitern (118a, 118b, 218a-d, 318a, 318b) Verbindungsabschnitte (115ab, 215, 315) aus einem Leitermaterial mit spezifischem elektrischem Widerstand vorgesehen sind, der mindestens um den Faktor 10 geringer ist als beim Heizleiter (118, 218, 318).

11. Heizeinrichtung nach einem der vorhergehenden Ansprüche, **dadurch gekennzeichnet, dass** mindestens eine Zusatz-Elektrode (323a, 323b) aus demselben Material wie die Elektrode (22, 122a, 122b, 222a, 222b, 322a, 322b) vorgesehen ist, die von keinem Heizleiter (18, 118, 218, 318) überdeckt oder überlappt wird, wobei vorzugsweise ein lateraler Abstand der Zusatz-Elektrode zu einem Heizleiter (18, 118, 218, 318) mindestens 1 mm oder mindestens 2 mm beträgt oder die doppelte Breite der Elektrodenbahn beträgt, wobei insbesondere die Zusatz-Elektrode (323a, 323b) auch an die Temperaturmesseinrichtung (25) angeschlossen ist.

12. Heizeinrichtung nach einem der vorhergehenden Ansprüche, **dadurch gekennzeichnet, dass** auf den Träger (12, 112, 212, 312) eine Trägerisolationsschicht (27) aufgebracht ist, wobei auf diese Trägerisolationsschicht (27)
entweder die mindestens eine Elektrode (22, 122a, 122b, 222a, 222b, 322a, 322b), auf diese Elektrode (22, 122a, 122b, 222a, 222b, 322a, 322b) die Isolationsschicht (29), auf diese Isolationsschicht (29) der Heizleiter (18, 118, 218, 318) und auf diesen Heizleiter (18, 118, 218, 318) eine Abdeckschicht (31) aufgebracht sind
oder der Heizleiter (18, 118, 218, 318), darauf eine Isolationsschicht (29) oder Dielektrikumsschicht, darauf eine Elektrode (22, 122a, 122b, 222a, 222b, 322a, 322b) und darauf eine Abdeckschicht (31) aufgebracht sind.

13. Verfahren zur Temperaturmessung an einer Heizeinrichtung (11, 111, 211, 311) nach einem der vorhergehenden Ansprüche, **dadurch gekennzeichnet, dass** einerseits eine Temperaturerfassung über einen durch die Isolationsschicht (29) zwischen Heizeinrichtung (11, 111, 211, 311) und Elektrode (22, 122a, 122b, 222a, 222b, 322a, 322b) fließenden temperaturabhängigen Leckstrom erfolgt und andererseits eine Temperaturmessung (25) an der Heizeinrichtung (11, 111, 211, 311) erfolgt, indem eine Temperaturänderung an der Elektrode (22, 122a, 122b, 222a, 222b, 322a, 322b) alleine gemessen wird und vorzugsweise ausgewertet wird als zeitliche Temperaturänderung.

14. Verfahren zur Herstellung einer Heizeinrichtung (11, 111, 211, 311) nach einem der Ansprüche 1 bis 12, **dadurch gekennzeichnet, dass** die Heizeinrichtung (11, 111, 211, 311) mehrere Heizleiter (18, 118, 218, 318) aufweist, insbesondere auch die Teil-Heizleiter (118a, 118b, 218a-d, 318a, 318b) nach Anspruch 10, wobei sämtliche Heizleiter (18, 118, 218, 318) und ggf. auch Teil-Heizleiter (118a, 118b, 218a-d, 318a, 318b) der Heizeinrichtung (11, 111, 211, 311) im selben Verfahrensschritt und aus demselben Heizleitermaterial aufgebracht werden.

15. Verfahren zur Herstellung einer Heizeinrichtung (11, 111, 211, 311) nach einem der Ansprüche 1 bis 12, **dadurch gekennzeichnet, dass** die Heizeinrichtung (11, 111, 211, 311) mehrere Elektroden (22, 122a, 122b, 222a, 222b, 322a, 322b) aufweist, insbesondere auch die Zusatz-Elektrode (323a, 323b) nach Anspruch 11, wobei sämtliche Elektroden (22, 122a, 122b, 222a, 222b, 322a, 322b, 323a, 323b) der Heizeinrichtung (11, 111, 211, 311) im selben Verfahrensschritt und aus demselben Elektrodenmaterial aufgebracht werden.

## Claims

1. Heating device (11, 111, 211, 311) having a temperature measuring device (25) for the heating device, the heating device (11, 111, 211, 311) having:
- a flat carrier (12, 112, 212, 312),
- at least one heating conductor (18, 118, 218, 318) on the flat carrier (12, 112, 212, 312),
- an electrode (22, 122a, 122b, 222a, 222b, 322a, 322b) on the flat carrier (12, 112, 212, 312),
- a layer structure on the carrier (12, 112, 212, 312) with an insulation layer (29) between the heating conductor (18, 118, 21 8, 318) and the electrode (22, 122a, 122b, 222a, 222b, 322a, 322b),
- a measuring device for detecting local high temperatures at the heating device (11, 111, 211, 311), the measuring device being connected to the electrode (22, 122a, 122b, 222a, 222b, 322a, 322b) and to the heating conductor (18, 118, 218, 318) and is designed to detect a temperature-dependent leakage current through the insulation layer (29) between the heating conductor (18, 118, 218, 318) and the electrode (22, 122a, 122b, 222a, 222b, 322a, 322b) and to evaluate it as a measure of a local temperature change at the heating device (11, 111, 211, 311),
wherein:
- the electrode (22, 122a, 122b, 222a, 222b, 322a, 322b) consists of a material with a temperature dependence of its electrical resistance, the temperature dependency is between 0.0005/°C and 0.01/°C or between 500 ppm/K and 10,000 ppm/K in a temperature range between 0°C and 500°C,
- the temperature measuring device (25) is connected to the electrode (22, 122a, 122b, 222a, 222b, 322a, 322b) for measuring a temperature at the electrode (22, 122a, 122b, 222a, 222b, 322a, 322b) using the temperature dependence of the electrical resistance of the electrode (22, 122a, 122b, 222a, 222b, 322a, 322b),
**characterized in that**:
- the electrode (22, 122a, 122b, 222a, 222b, 322a, 322b) is elongated,
- the electrode (22, 122a, 122b, 222a, 222b, 322a, 322b) has two electrode connections (23, 23a, 23b, 123a, 123b, 223a, 223b, 323a, 323b) and is connected to the temperature measuring device (25) by means of the latter.

2. Heating device according to claim 1, **characterized in that** the temperature dependence of the electrical resistance of the electrode (22, 122a, 122b, 222a, 222b, 322a, 322b) is between 0.0015/°C and 0.005/°C or between 1500 ppm/K and 5000 ppm/K in a temperature range between 0°C and 500°C.

3. Heating device according to claim 1 or 2, **characterized in that** the electrode (22, 122a, 122b, 222a, 222b, 322a, 322b) is at least partially covered by the heating conductor (18, 118, 218, 318) with the insulation layer (29) in between, wherein a section of the electrode (22, 122a, 122b, 222a, 222 b, 322a, 322b) extends from the heating conductor (18, 118, 218, 318), in particular along at least 70% or 90% of the longitudinal extent of the heating conductor (18, 118, 218, 318).

4. Heating device according to one of the preceding claims, **characterized in that** the electrode (22, 122a, 122b, 222a, 222b, 322a, 322b) has a small width compared to its length, in particular the length being at least 20 times as large as the width, preferably at least 50 times as large as the width.

5. Heating device according to one of the preceding claims, **characterized in that** the insulation layer (29) has an electrical resistance between a top side and an underside or between heating conductor (18, 118, 218, 318) and electrode (22, 122a, 122b, 222a, 222b, 322a, 322b) of at least 1 MΩ in a temperature range between 0°C and 150°C, preferably at least 10 MΩ.

6. Heating device according to one of the preceding claims, **characterized in that** the electrode (22, 122a, 122b, 222a, 222b, 322a, 322b) has a total electrical resistance between 50 Ω and 100 kΩ in a temperature range between 0°C and 500°C, in particular between 5 kΩ and 20 kΩ.

7. Heating device according to one of the preceding claims, **characterized in that** the electrode (22, 122a, 122b, 222a, 222b, 322a, 322b) has a constant width along its longitudinal extent, in particular also a constant thickness.

8. Heating device according to one of the preceding claims, **characterized in that** the electrode (22, 122a, 122b, 222a, 222b, 322a, 322b) has a silver content as electrode material, in particular up to a maximum of 95%, preferably between 80% and 90%.

9. Heating device according to one of the preceding claims, **characterized in that** the electrode material has a variable temperature coefficient of electrical resistance, preferably a positive temperature coefficient of electrical resistance.

10. Heating device according to one of the preceding claims, **characterized in that** the heating conductor (118, 218, 318) has a plurality of sub-heating conductors (118a, 118b, 218a-d, 318a, 318b) which are connected to one another, preferably each of the sub-heating conductors (118a, 118b, 218a-d, 318a, 318b) covers an electrode (122a, 122b, 222a, 222b, 322a, 322b) or an electrode section, in particular connecting sections (115ab, 215, 315) being provided between the individual sub-heating conductors (118a, 118b, 218a-d, 318a, 318b) are provided connecting sections (115ab, 215, 315) made of a conductor material with a specific electrical resistance which is lower, by a factor of at least 10, than that of the heating conductor (118, 218, 318).

11. Heating device according to one of the preceding claims, **characterized in that** at least one additional electrode (323a, 323b) made of the same material as the electrode (22, 122a, 122b, 222a, 222b, 322a, 322b) is provided, which is not covered or overlapped by any heating conductor (18, 118, 218, 318), wherein preferably a lateral distance of the additional electrode from a heating conductor (18, 118, 218, 318) is at least 1 mm or at least 2 mm or is twice the width of the electrode web, in particular the additional electrode (323a, 323b) also being connected to the temperature measuring device (25).

12. Heating device according to one of the preceding claims, **characterized in that** a carrier insulation layer (27) is applied to the carrier (12, 112, 212, 312), wherein onto this carrier insulation layer (27)
either the at least one electrode (22, 122a, 122b, 222a, 222b, 322a, 322b), on this electrode (22, 122a, 122b, 222a, 222b, 322a, 322b), the insulation layer (29) is applied to this electrode (22, 122a, 122b, 222a, 222b, 322a 322b), on the insulation layer (29) the heating conductor (18, 118, 218, 318) and on this the heating conductor (18, 118, 218, 318) the covering layer (31) are applied,
or the heating conductor (18, 118, 218, 318), on this an insulation layer (29) or dielectric layer, onto this an electrode (22, 122a, 122b, 222a, 222b, 322a, 322b) and onto this a covering layer (31) are applied to it.

13. Method for measuring the temperature at a heating device (11, 111, 211, 311) according to one of the preceding claims, **characterized in that**, on the one hand, a temperature is detected via a current flowing through the insulation layer (29) between the heating device (11, 111, 211, 311) and electrode (22, 122a, 122b, 222a, 222b, 322a, 322b) and, on the other hand, a temperature measurement (25) is carried out on the heating device (11, 111, 211, 311) by measuring a temperature change at the electrode (22, 122a, 122b, 222a, 222b, 322a, 322b) alone and preferably evaluating it as a temperature change over time.

14. Method for producing a heating device (11, 111, 211, 311) according to one of the claims 1 to 12, **characterized in that** the heating device (11, 111, 211, 311) has a plurality of heating conductors (18, 118, 218, 318), in particular also the partial heating conductors (118a, 118b, 218a-d, 318a, 318b) according to claim 10, wherein all heating conductors (18, 118, 218, 318) and, if appropriate, also partial heating conductors (118a, 118b, 218a-d, 318a, 318b) of the heating device (11, 111, 211, 311) are applied in the same process step and from the same heating conductor material.

15. Method for producing a heating device (11, 111, 211, 311) according to one of the claims 1 to 12, **characterized in that** the heating device (11, 111, 211, 311) has a plurality of electrodes (22, 122a, 122b, 222a, 222b, 322a, 322b), in particular also the additional electrode (323a, 323b) according to claim 11, wherein all the electrodes (22, 122a, 122b, 222a, 222b, 322a, 322b, 323a, 323b) of the heating device (11, 111, 211, 311) are applied in the same process step and from the same electrode material.

## Revendications

1. Dispositif de chauffage (11, 111, 211, 311) avec un dispositif de mesure de température (25) pour le dispositif de chauffage, le dispositif de chauffage (11, 111, 211, 311) présentant :
- un support plat (12, 112, 212, 312),
- au moins un conducteur chauffant (18, 118, 218, 318) sur le support plat (12, 112, 212, 312),
- une électrode (22, 122a, 122b, 222a, 222b, 322a, 322b) sur le support plat (12, 112, 212, 312),
- une structure en couches sur le support (12, 112, 212, 312) avec une couche d'isolation (29) entre le conducteur chauffant (18, 118, 218, 318) et l'électrode (22, 122a, 122b, 222a, 222b, 322a, 322b),
- un dispositif de mesure pour détecter des températures élevées locales sur le dispositif de chauffage (11, 111, 211, 311), le dispositif de mesure étant relié à l'électrode (22, 122a, 122b, 222a, 222b, 322a, 322b) et au conducteur chauffant (18, 118, 218, 318) et étant conçu pour cela, détecter un courant de fuite dépendant de la température à travers la couche isolante (29) entre le conducteur chauffant (18, 118, 218, 318) et l'électrode (22, 122a, 122b, 222a, 222b, 322a, 322b) et l'évaluer comme mesure d'une modification locale de la température sur le dispositif de chauffage (11, 111, 211, 311), où :
- l'électrode (22, 122a, 122b, 222a, 222b, 322a, 322b) est constituée d'un matériau dont la résistance électrique dépend de la température, la dépendance de la température étant comprise entre 0,0005/°C et 0,01/°C ou entre 500 ppm/K et 10.000 ppm/K dans une plage de température comprise entre 0°C et 500°C,
- le moyen de mesure de température (25) est connecté à l'électrode (22, 122a, 122b, 222a, 222b, 322a, 322b) pour mesurer une température à l'électrode (22, 122a, 122b, 222a, 222b, 322a, 322b) en utilisant la dépendance de la température de la résistance électrique de l'électrode (22, 122a, 122b, 222a, 222b, 322a, 322b),
**caractérisé en ce que** :
- l'électrode (22, 122a, 122b, 222a, 222b, 322a, 322b) est allongée,
- l'électrode (22, 122a, 122b, 222a, 222b, 322a, 322b) comporte deux bornes d'électrode (23, 23a, 23b, 123a, 123b, 223a, 223b, 323a, 323b) et est reliée à celles-ci par le dispositif de mesure de température (25).

2. Dispositif de chauffage selon la revendication 1, **caractérisé en ce que** la dépendance de la température de la résistance électrique de l'électrode (22, 122a, 122b, 222a, 222b, 322a, 322b) est comprise entre 0,0015/°C et 0,005/°C ou entre 1.500 ppm/K et 5.000 ppm/K dans une plage de températures comprise entre 0°C et 500°C.

3. Dispositif de chauffage selon la revendication 1 ou 2, **caractérisé en ce que** l'électrode (22, 122a, 122b, 222a, 222b, 322a, 322b) est au moins partiellement recouverte par le conducteur chauffant (18, 118, 218, 318) avec la couche isolante (29) entre eux, de préférence le long d'une extension longitudinale du conducteur chauffant (18, 118, 218, 318), une partie de l'électrode (22, 122a, 122b, 222a, 222b, 322a, 322b) est recouverte par le conducteur chauffant (18, 118, 218, 318), notamment le long d'au moins 70% ou 90% de l'étendue longitudinale du conducteur chauffant (18, 118, 218, 318).

4. Dispositif de chauffage selon l'une des revendications précédentes, **caractérisé en ce que** l'électrode (22, 122a, 122b, 222a, 222b, 322a, 322b) présente une faible largeur par rapport à sa longueur, notamment la longueur est au moins 20 fois supérieure à la largeur, de préférence au moins 50 fois supérieure à la largeur.

5. Dispositif de chauffage selon l'une des revendications précédentes, **caractérisé en ce que** la couche isolante (29) présente une résistance électrique entre une face supérieure et une face inférieure ou entre le conducteur chauffant (18, 118, 218, 318) et l'électrode (22, 122a, 122b, 222a, 222b, 322a, 322b) d'au moins 1 MΩ dans une plage de température comprise entre 0°C et 150°C, de préférence d'au moins 10 MΩ.

6. Dispositif de chauffage selon l'une des revendications précédentes, **caractérisé en ce que** l'électrode (22, 122a, 122b, 222a, 222b, 322a, 322b) présente une résistance électrique totale comprise entre 50 Ω et 100 kΩ dans une plage de température comprise entre 0°C et 500°C, notamment entre 5 kΩ et 20 kΩ.

7. Dispositif de chauffage selon l'une des revendications précédentes, **caractérisé en ce que** l'électrode (22, 122a, 122b, 222a, 222b, 322a, 322b) présente une largeur constante le long de son extension longitudinale, en particulier également une épaisseur constante.

8. Dispositif de chauffage selon l'une des revendications précédentes, **caractérisé en ce que** l'électrode (22, 122a, 122b, 222a, 222b, 322a, 322b) présente une proportion d'argent comme matériau d'électrode, notamment jusqu'à 95% maximum, de préférence entre 80% et 90%.

9. Dispositif de chauffage selon l'une des revendications précédentes, **caractérisé en ce que** le matériau d'électrode présente un coefficient de température variable de la résistance électrique, de préférence un coefficient de température positif de la résistance électrique.

10. Dispositif de chauffage selon l'une des revendications précédentes, **caractérisé en ce que** le conducteur chauffant (118, 218, 318) comprend plusieurs sous-conducteurs chauffants (118a, 118b, 218a-d, 318a, 318b) connectés entre eux, chacun des sous-conducteurs chauffants (118a, 118b, 218a-d, 318a, 318b) comprenant de préférence une électrode (122a, 122b, 222a, 222b, 322a, 322b) ou recouvre une section d'électrode, des sections de liaison (115ab, 215, 315) en un matériau conducteur présentant une résistance électrique spécifique qui est au moins 10 fois inférieure à celle du conducteur chauffant (118, 218, 318) étant notamment prévues entre les différents conducteurs chauffants partiels (118a, 118b, 218a-d, 318a, 318b).

11. Dispositif de chauffage selon l'une des revendications précédentes, **caractérisé en ce qu'**il est prévu au moins une électrode supplémentaire (323a, 323b) réalisée dans le même matériau que l'électrode (22, 122a, 122b, 222a, 222b, 322a, 322b) et qui n'est recouverte ou chevauchée par aucun conducteur chauffant (18, 118, 218, 318), de préférence, une distance latérale de l'électrode supplémentaire par rapport à un conducteur chauffant (18, 118, 218, 318) étant d'au moins 1 mm ou d'au moins 2 mm ou étant égale au double de la largeur de la bande d'électrode, en particulier l'électrode supplémentaire (323a, 323b) étant également raccordée au dispositif de mesure de température (25).

12. Dispositif de chauffage selon l'une des revendications précédentes, **caractérisé en ce qu'**une couche d'isolation de support (27) est appliquée sur le support (12, 112, 212, 312), cette couche d'isolation de support (27) étant recouverte d'une couche d'isolation d'électrode
soit l'au moins une électrode (22, 122a, 122b, 222a, 222b, 322a, 322b), sur cette électrode (22, 122a, 122b, 222a, 222b, 322a, 322b) la couche isolante (29), sur cette couche isolante (29) le conducteur chauffant (18, 118, 218, 318) et sur ce conducteur chauffant (18, 118, 218, 318) une couche de recouvrement (31) sont appliqués,
ou le conducteur chauffant (18, 118, 218, 318), sur celui-ci une couche isolante (29) ou une couche diélectrique, sur celui-ci une électrode (22, 122a, 122b, 222a, 222b, 322a, 322b) et sur celui-ci une couche de recouvrement (31) sont appliqués.

13. Procédé de mesure de la température sur un dispositif de chauffage (11, 111, 211, 311) selon l'une des revendications précédentes, **caractérisé en ce que**, d'une part, une détection de la température est effectuée par l'intermédiaire d'un courant traversant la couche isolante (29) entre le dispositif de chauffage (11, 111, 211, 311) et l'électrode (22, 122a, 122b, 222a, 222b, 322a, 322b) et, d'autre part, une mesure de température (25) est effectuée sur le dispositif de chauffage (11, 111, 211, 311) en mesurant une variation de température sur l'électrode (22, 122a, 122b, 222a, 222b, 322a, 322b) seule et en l'évaluant de préférence comme variation de température dans le temps.

14. Procédé de fabrication d'un dispositif de chauffage (11, 111, 211, 311) selon l'une des revendications 1 à 12, **caractérisé en ce que** le dispositif de chauffage (11, 111, 211, 311) présente plusieurs conducteurs chauffant (18, 118, 218, 318), en particulier également les conducteurs de chauffage partiels (118a, 118b, 218a-d, 318a, 318b) selon la revendication 10, tous les conducteurs de chauffage (18, 118, 218, 318) et éventuellement les conducteurs chauffant partiels (118a, 118b, 218a-d, 318a, 318b) étant reliés les uns aux autres par une liaison de transmission également des conducteurs chauffants partiels (118a, 118b, 218a-d, 318a, 318b) du dispositif de chauffage (11, 111, 211, 311) sont appliqués au cours de la même étape de procédé et à partir du même matériau de conducteur chauffant.

15. Procédé de fabrication d'un dispositif de chauffage (11, 111, 211, 311) selon l'une des revendications 1 à 12, **caractérisé en ce que** le dispositif de chauffage (11, 111, 211, 311) comporte plusieurs électrodes (22, 122a, 122b, 222a, 222b, 322a, 322b), en particulier également l'électrode supplémentaire (323a, 323b) selon la revendication 11, toutes les électrodes (22, 122a, 122b, 222a, 222b, 322a, 322b, 323a, 323b) du dispositif de chauffage (11, 111, 211, 311) étant appliquées dans la même étape de procédé et dans le même matériau d'électrode.
